(19) Europäisches Patentamt
European Patent Office
Office européen des brevets

(11) EP 2 735 342 A1

(12) EUROPEAN PATENT APPLICATION

(43) Date of publication:
28.05.2014 Bulletin 2014/22

(51) Int Cl.:
A62C 99/00 (2010.01)　　　H04B 3/54 (2006.01)

(21) Application number: 13193960.5

(22) Date of filing: 21.11.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 21.11.2012 IT TO20121014

(71) Applicant: Cambas S.r.l.
Torino (IT)

(72) Inventors:
• Bassignana, Luigi
12016 Peveragno (IT)
• Bassignana, Enrico
12100 Cuneo (IT)

(74) Representative: Boggio, Luigi et al
Studio Torta S.p.A.
Via Viotti, 9
10121 Torino (IT)

(54) **Device, system and method for controlling photovoltaic panels**

(57) Electronic device (21) for controlling a solar panel (12) connectable, by means of an electrical power supply connection (23), to a control device (26, 26M) configured to send to the electrical connection (23) a control and supply signal ($S_{OC}$) modulated in frequency and/or amplitude, the electronic device (21) being configured to: detect the presence and absence of the control and supply signal ($S_{OC}$) on the electrical connection (23); electrically couple, in a first operating condition in which the control and supply signal is present on the electrical connection, the solar panel (12) to the electrical connection (23); and electrically decouple, in a second operating condition in which the control and supply signal is absent on the electrical connection, the solar panel (12) from the electrical connection.

FIG. 3

## Description

The present invention concerns a device, system and method for controlling photovoltaic panels (or solar panels).

Solar panel plants and in particular photovoltaic plants are known. In particular, the European patent no. EP 2317486 describes a system for controlling photovoltaic panels adapted to control, individually or en bloc, solar panels of a photovoltaic system, in particular for blocking the production of electricity (for example due to malfunctioning of one or more solar panels).

The system described in EP 2317486, according to one embodiment, comprises panel control electronics mounted on board each solar panel to be controlled. Said control electronics include a microprocessor and are configured to block the production of voltage and current of the panel following the receipt of a command, in particular modulated in amplitude and/or in frequency, according to a predefined protocol.

The presence of microprocessor-based electronics on board the panel, together with the need to define a communication protocol adapted to enable the sending, and correct interpretation, of commands towards the panel electronics involves a high cost and makes the solar panels thus manufactured more sensitive to failures of the on-board electronics.

The document DE 198 44 977 describes a protection system for a solar panel, in particular for protection against non-authorised use. According to the system described in this document, a plurality of protection devices are present at the solar module side electrically connected in parallel to respective solar cells, and a control device at the consumer side. The control device sends a modulated signal to the protection devices, which respond by sending in turn a respective modulated signal. The protection devices are supplied by the electrical current generated by the respective solar cells to which they are connected in parallel and therefore function only during the day. If a protection device does not receive the modulated signal sent by the control device, or vice versa, the respective solar cell is disabled. For this purpose, the protection device is controlled so as to short-circuit the respective solar cell so that it can no longer supply electricity to the power supply network. The disadvantage of this embodiment is that the short-circuited solar cell is heated. Excessive heating could result in serious damage to the solar cell, or even the risk of fire.

The object of the present invention is to provide a system and a method for controlling photovoltaic panels, able to overcome the drawbacks of the known art and in particular able to guarantee a high level of safety and galvanic electrical insulation of each photovoltaic panel.

According to the present invention a system and a method are provided for controlling photovoltaic panels, as defined in the attached claims.

For a better understanding of the present invention, preferred embodiments thereof are now described, purely by way of nonlimiting example and with reference to the accompanying drawings, in which:

- figure 1 is a general block diagram of a solar panel system according to the present invention;
- figures 2a and 2b show an electronic system associated with a solar panel in a first and second operating condition respectively;
- figure 3 shows the panel electronics of figures 2a and 2b according to an embodiment of the present invention;

- figures 4a-4d show operating phases of the panel electronics of figure 3;
- figure 5 shows the panel electronics of figure 3 in further detail, according to an embodiment of the present invention; and
- figure 6 shows, in further detail, a circuit implementation of a portion of the panel electronics of figure 5.

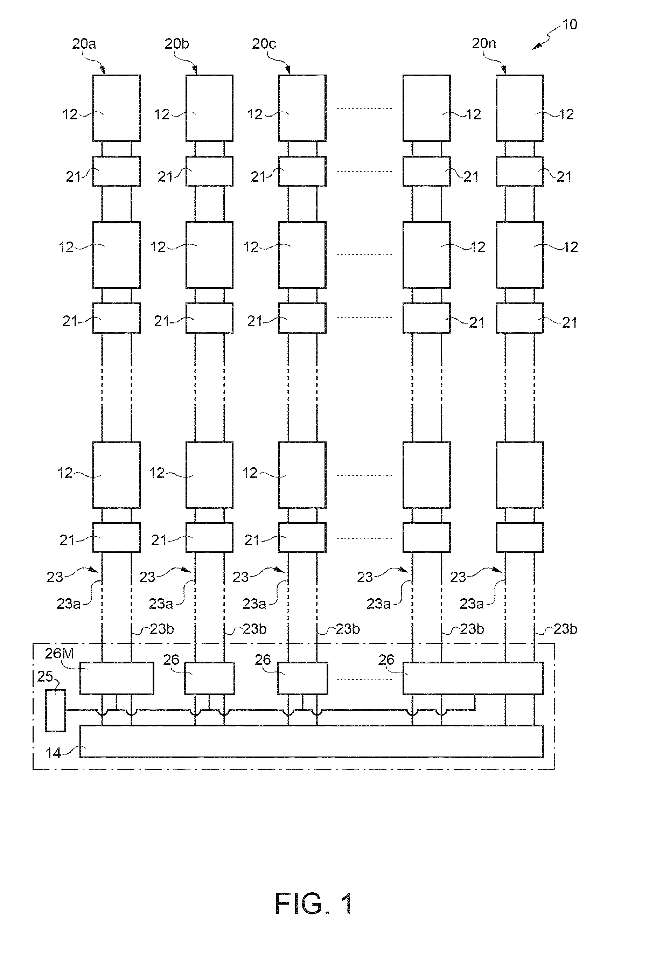

Figure 1 shows a control system 10 of one or more photovoltaic panel plants according to an embodiment of the present invention.

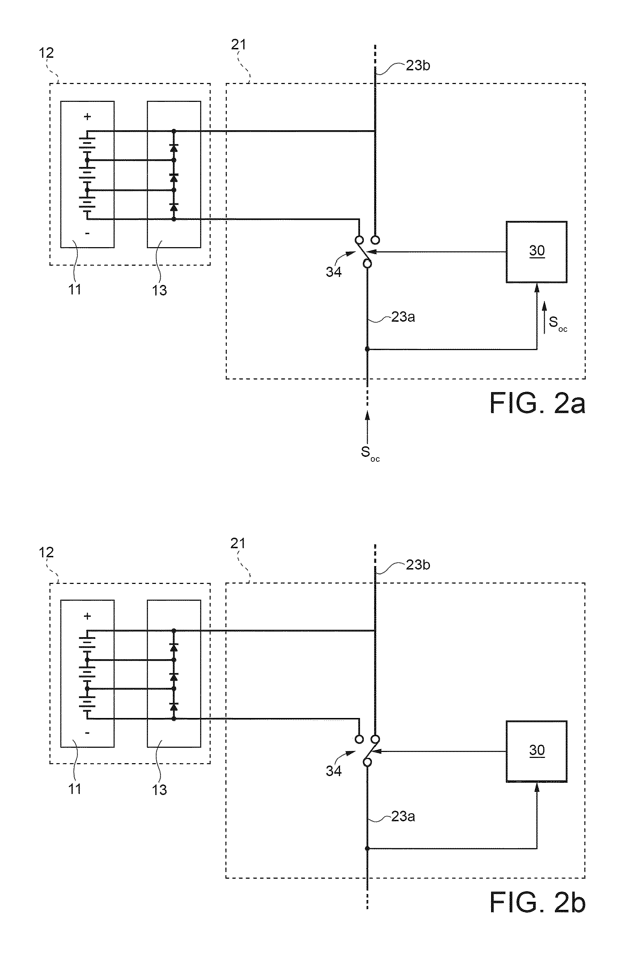

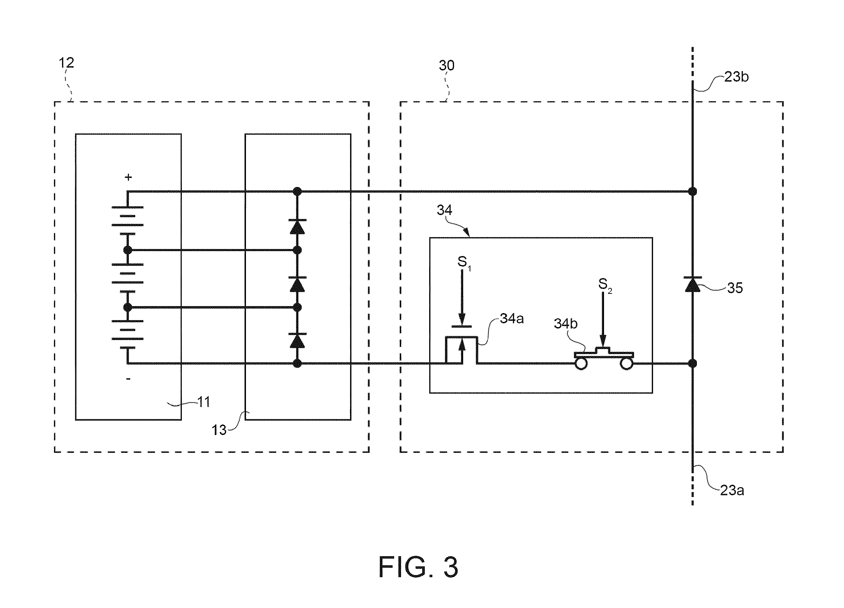

The control system 10 presents a plurality of solar panels 12, for example photovoltaic panels, configured to generate, in a known way, a direct current electrical voltage. As shown schematically in figures 2a and 2b, or in figure 3, each solar panel 12, or photovoltaic module, presents a plurality (e.g. three series) of solar cells 11, and a plurality of bypass diodes 13, each of which is connected in antiparallel to a respective solar panel, or photovoltaic module, 12. The bypass diodes 13 are typically inserted inside a solar panel 12 to prevent any reverse current circulating in the solar cells 11.

As can be seen from figure 1, the solar panels 12 are arranged in groups of panels 20a-20n (also called strings of panels), in which the solar panels 12 belonging to the same group 20a-20n are electrically connected in series to one another. The electrical voltage/current generated, in use, by the solar panels 12 belonging to the same string of panels 20a-20n, is proportional to the number of solar panels 12 of said string of panels 20a-20n.

The solar panels 12 belonging to the same string of panels 20a-20n are operatively coupled to a converter device 14, for example an inverter, in a known way by means of pairs 23a and 23b (string terminations) of electrical connections 23. The converter device 14 is adapted to convert the electrical voltage generated by the strings of panels 20a-20n into electrical voltage, for example of alternating current type, for distribution to an electricity distribution network (not shown in the figure).

According to the present invention, each solar panel 12 is associated with a panel electronic device, or panel electronics 21. The panel electronic device, or panel electronics 21 is, according to an embodiment of the present invention, integrated in a respective solar panel 12 (e.g. integrated on the same printed circuit that houses the bypass diodes 13). According to a different embodiment, the panel electronics 21 are outside the solar panel 12, and electrically coupled to it. The panel electronics 21 consist of a proprietary circuit.

It should be noted here that the panel electronics 21 can be installed on all the solar panels 12 or only some solar panels 12, as required.

Furthermore, each string of panels 20a-20n comprises an electronic control device (or string electronics) 26, configured to electrically supply the panel devices 21 of the respective string of panels 20a-20n. Furthermore, the electronic control device 26 is configured to send, to each panel electronic device 21 of the respective string of panels 20a-20n, a control signal $S_{OC}$ to control each panel electronic device 21 in a pre-determined operating mode, as better described below.

Both the panel devices 21 and the control devices 26 are connected to the pairs 23a, 23b of electrical connections 23 which couple one or more strings of panels 20a-20n to the inverter 14.

Even more preferably, each panel electronics 21 is mounted on board a respective panel 12, for example incorporated in the panel 21 by a Manufacturer of panels, or wired externally to the solar panel 12 by an installer, or other. The string electronics 26 are mounted "in cascade" between the pairs 23a, 23b of electrical connections 23 and the inverter 14 so as to create an architecture in which:

- each solar panel 12 to be controlled is associated with panel electronics 21;
- each group of panels or string of panels 20a-20n to be controlled is coupled to the inverter 14 via string electronics 26.

Each panel electronics 21, associated with a respective solar panel 12, is preferably produced in the form of an electronic board, and includes at least one signal detection circuit 30 and one switch circuit 34. Note that for the purposes of the present invention, as will be seen further on in the present description, it is not necessary to use any microprocessor to create the panel electronics 21.

Figures 2a and 2b show, schematically and according to one embodiment of the present invention, the panel electronics 21 which provide an interface between a respective solar panel 12 and the pairs 23a, 23b of the electrical connections 23.

The signal detector 30 is coupled to the pairs 23a, 23b of the electrical connections 23 and to the switch circuit 34 to command the latter in a first and in a second operating condition shown in figures 2a and 2b respectively.

The switch circuit 34 is configured to electrically connect in series, in the first operating condition of figure 2a, the solar panel 12 to the electrical connection 23a, and decouple, in the second operating condition of figure 2b, the solar panel 12 from the electrical connection 23a. Furthermore, in the second operating condition, the switch circuit 34 interrupts the connection between the solar panel 12 and the electrical connection 23a; the connection between the inverter 14 and the other solar panels 12 belonging to the same string of panels 20a-20n is not interrupted, however, since the action of the switch circuit 34 is that of bypassing the solar panel 12 forming a through connection which electrically connects the electrical connection 23a to the electrical connection 23b, favouring the passage of electrical power signal between them. Figure 3, described below, shows an embodiment of the switch circuit 34.

More specifically, the signal detection circuit 30 is configured to detect the presence of the control signal $S_{OC}$ which passes through the electrical connection 23a and, on the basis of a result of said detection (presence or absence of the control signal $S_{OC}$), control the switch circuit 34 in the first or in the second operating condition.

During the first operating condition of the switch circuit 34, the solar panel 12 supplies electricity to the electrical connections 23 which, as said, distribute it to an electricity distribution network. During the second operating condition of the switch circuit 34, the supply of electricity from the solar panel 12 towards the electrical connections 23 (and therefore towards the electricity distribution network) is interrupted. By interrupting the electrical connection between solar panel 12 and electrical connections 23, the photovoltaic cells pass from a state of delivery of electricity to a state of no load. The solar panel 12 thus excluded does not dissipate energy or deliver voltage. This overcomes the problem of having a solar panel 12 positioned in series with other solar panels 12 of the same group 20a-20n, which could constitute a source of dangerous high voltage in the event of fire and/or switch-off of the solar panel 12.

With reference again to figure 1, the panel electronics 21 are powered both by the electricity supplied by the solar panels 12, and by an alternating current signal, for example sinusoidal, generated by the string electronics 26; said signal is injected in "current mode" onto the electrical connections 23. In any case, the alternating current signal is such that it is sufficient to power the panel electronics 21, even in the absence of energy supplied by the solar panels 12 (for example at night). According to one embodiment of the present invention, said signal is the control signal $S_{OC}$.

In other words, the control signal $S_{OC}$ is the power signal of the panel electronics 21 and can be furthermore modulated in amplitude and/or frequency (for example to meet the power supply needs of the electronics 21 on board the panel 12). The modulation of the control signal $S_{OC}$, however, should not be considered a means of data transport. In other words, the control signal $S_{OC}$ is a signal (for example sinusoidal) at a certain carrier, the presence of which is in itself indicative of an operating condition (correct or normal operation) and the absence of which is in itself indicative of another operating condition (e.g. danger or alarm).

During the day, when the solar panels 12 are in use and generate electrical current, the signal generated by the solar panels 12 operates as a further power supply signal. During the night, when the solar panels 12 do not generate electrical current, or in general when they do not generate sufficient electrical current, the control signal $S_{OC}$ is the only signal operating as a power supply for the panel electronics 21.

The string electronics 26 are, preferably, produced in the form of one or more electronic boards including a microprocessor, and powered by an energy source or supply circuit preferably independent of the inverter 14, possibly by a voltage delivered by an uninterruptible power supply or back-up unit 25.

According to one embodiment, the string electronics 26 are adapted to electrically power the panel devices 21 associated with one or more strings of panels 20a-20n and to exchange information with one or more strings of panels associated with them. Below, for the sake of simplicity, it is assumed that string electronics 26 are connected to one single string and that they "see" the panel electronics 21 connected to the string.

Furthermore, the system 10, comprising a plurality of strings of panels 20a-20n, comprises string electronics configured as "Master" string electronics 26M, identical in terms of circuitry to the other string electronics 26.

According to further embodiments, the string electronics 26 or, preferably, the Master string electronics 26M are connected to external devices (not shown as they are not the subject of the present invention) thus permitting the control thereof by devices connected in remote and/or local mode.

In general, the string electronics 26 and/or the Master string electronics 26M are adapted to performing, within the system 10, one or more of the following functions:

- collect and store the information concerning the strings of panels;
- determine the state of the system 10 or of the string of panels;
- control the communication of alarms and energy measures coming from the strings of panels;
- measure and store ambient temperature and humidity and radiation of the system by means of appropriate sensors connected to them;
- exchange instructions and commands with devices connected in remote mode.

Naturally if the system comprises one single string of panels (for example the string of panels 20a), the string electronics 26 correspond to the Master string electronics 26M, as can be easily understood by a person skilled in the art.

The string electronics 26 or 26M are configured to send one or more signals, for example of alternating current type, in particular sinusoidal signals, along the electrical connections 23. Even more in particular, two types of electrical signals coexist along the connections 23:

- a first signal, or power signal, in direct current (DC) due to the panels 12;
- a second signal, or low power signal, in alternating current generated by the string electronics 26 and transmitted to the panel devices 21.

The power signal (first signal) consists of the direct current signal produced by the panels 12 and sent to the inverter 14 to produce energy towards the distribution network.

The low power signal (second signal) is, for example, a signal with frequency between approximately 50 and 150 kHz, preferably between 70 and 100 kHz, and a current of approximately 20 mA, injected in series, for example on the electrical connection 23a to which the string electronics 26 are connected. According to one embodiment of the present invention, the low power signal is adapted to perform the function of both power supply and logic communication for the panel electronics 21; said low power signal is the control signal $S_{OC}$ previously mentioned.

The string electronics 26, which are connected between the string terminations 23a, 23b and the inverter 14, represent, for the purposes of circulation of the direct current, a through circuit and do not present drops or losses in relation to the electricity generated by the panels 12. According to one embodiment, the string electronics 26, which are configured to transmit the second signal towards the various panel electronics 21, are connected in series to the electrical connection 23a by means of a through connection, for example an appropriately sized transformer, and inject the second signal onto the electrical connection 23a. In particular, said transformer is sized so that the direct current that crosses it does not bring it to saturation, and its electrical resistance to the direct current is low, for example a few milliohms (in particular, a maximum of 5 milliohms).

The second signal (control signal $S_{OC}$), injected in alternating current, runs through the electrical connection 23a and crosses the panels 12, added to the first direct current signal.

Preferably, also the panel electronics 21 are connected by means of through connections to the electrical connection 23a, for example by means of respective current transformers, analogously to what was described for the string electronics 26, so that said transformers are crossed by the two types of signals.

Also for the panel electronics 21, the relative transformer will satisfy one, some or all of the following characteristics:

- presents a practically null resistance (a few milliohms, e.g. max 5 milliohms) for passage of the direct current;

- does not become saturated due to the direct current that crosses it;
- presents a characteristic impedance corresponding to that of the signal generated by the string electronics;
- has at its secondary winding a voltage such as to power the panel electronics, for example 10V peak.

As can be easily deduced, the communication system described so far is based on waves conveyed along a power line, normally crossed by direct current.

Given the operation of the panel electronics 21 also at night or in conditions in which there is no direct current and voltage (i.e. that produced by the solar panels) on the power lines 23a, 23b, it is evident that said electronics 21 takes its power from the control signal $S_{OC}$ and not from the energy produced by the photovoltaic panels. In other words the panel electronics 21 can be powered only by the signal $S_{OC}$ (after rectification of the signal $S_{OC}$ by means of a rectifier of known type).

The control signal $S_{OC}$ injected therefore has a dual function: 1) remote powering of the panel electronics 21 (in the absence of the power supply $V_{AL}$); 2) control of the switch circuit 34 belonging to the panel electronics 21.

The signal $S_{OC}$ is therefore a control and power supply signal of the panel electronics 21.

The function (1), of remote powering, allows the transmission of energy for operation of the panel electronics 21. This is useful, in particular, during a night-time situation, or another contingent situation in which the electrical connections 23 do not have sufficient voltage to power the detection circuit 30.

The control function (2) is performed as follows:

- if the control signal $S_{OC}$ is present on the electrical connection 23a, the signal detection circuit 30 detects the presence of said control signal $S_{OC}$ and controls the switch circuit 34 in a closed state (i.e. in conduction): in this case we are in the above-mentioned first operating condition of figure 2a;
- in the event of absence of the control signal $S_{OC}$ on the electrical connection 23a, the signal detection circuit 30 detects said absence and controls the switch circuit 34 in an open state (i.e. insulating the solar panel 12): in this case we are in the above-mentioned second operating condition of figure 2b.

It follows that if, for any reason, the control signal $S_{OC}$ on the electrical connections 23 of one or more strings of panels 20a-20n is missing, said string or strings of panels 20a-20n no longer generates any voltage as all its solar panels 12 are interdicted and electrically insulated from the line 23.

Figure 3 shows, in greater detail, the panel electronics 21 of figures 2a, 2b, according to one embodiment of the present invention. In particular, figure 3 shows an embodiment of the switch circuit 34, according to which the switch circuit 34 comprises a transistor 34a, for example a MOSFET transistor, and a relay 34b, connected in series to each other and coupled to the electrical connection 23a. The transistor 34a includes a gate; the signal detection circuit 30 is coupled to the gate of the transistor 34a, to command the transistor 34a, by means of a signal $S_1$, in an ON state (conduction) or OFF state (interdiction) on the basis of the presence or absence respectively of the control signal $S_{OC}$.

According to one embodiment of the present invention, the relay 34b is of bistable type and includes one or more coils which can be commanded to operate the relay 34b in the ON state and, alternatively, the OFF state; the signal detection circuit 30 is coupled with the relay 34b, to command the latter, by means of a signal $S_2$, in the ON state (conduction) or OFF state (interdiction) on the basis of the presence or absence respectively of the control signal $S_{OC}$.

Both the transistor 34a and the relay 34b have the function of interrupting the electrical line that connects the solar panel 12 to the electrical connection 23a. Although it is possible to use the transistor 34a only, the presence of the relay 34b improves the insulation between the solar panel 12 and the electrical connection 23a during the second operating condition (i.e. in the absence of control signal $S_{OC}$). In this way the electrical insulation is guaranteed also in the presence of any malfunctioning of the MOSFET device, which even in the interdiction state could allow the passage of a loss current between its source and drain terminals. In any case, the galvanic insulation guaranteed by the relay 34b is superior to the insulation guaranteed by the silicon technology.

The switch circuit 34 furthermore comprises a diode 35, adapted to electrically couple the electrical connection 23a to the electrical connection 23b, thus bypassing the solar panel 12. The diode 35 conducts only when the transistor 34a and/or the relay 34b are interdicted.

During the passage from the first operating condition to the second operating condition, the relay 34b is preferably activated after interdiction (opening) of the transistor 34a. This precaution allows the use of a relay 34b with reduced dimensions, obtaining a longer working life of the same, since its contacts are always activated in the absence of current (this prevents the occurrence of voltaic arcs on the contacts of the relay 34b). When the flow of current on the electrical connection 23a is interrupted, the diode 35 conducts, bypassing the solar panel 12. In other words, the diode 35 has the function of a deviation contact.

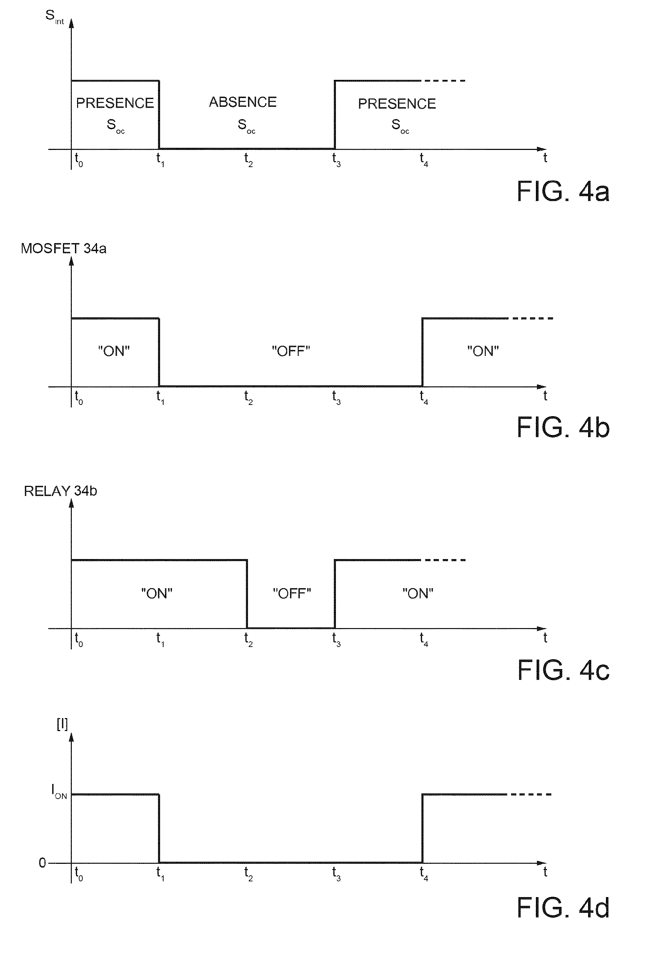

Figures 4a-4d show, using the same time scale on the X axis, a time trend exemplifying operating signals of the panel electronics 21.

Figure 4a shows an intermediate signal $S_{int}$ indicative of the presence or absence of the control signal $S_{OC}$; said signal $S_{int}$ has, in the context of the present description, the purpose of indicating the presence or absence of the control signal $S_{OC}$ on the electrical connection 23a.

As shown in figure 4b, in the case of presence of the control signal $S_{OC}$ on the connection 23a, the signal detection circuit 30 controls the transistor 34a and the relay 34b in the ON state. Therefore, the current generated by the solar panels 16 can flow onto the electrical connection 23, as shown by way of example in figure 4d (current $I_{ON}$).

At the time instant $t_1$, there is no control signal $S_{OC}$ on the connection 23a. The signal detection circuit 30, detecting this omission, controls the transistor 34a in interdiction (time instant $t_1$) and, after a guard time interval $t_1$-$t_2$, for example from 1 ms to 100 ms, in particular equal to 5mS, it switches off the relay 34b. This guarantees that the relay is operated in the absence of current, or after the transistor 34a has been switched off.

Starting from the time instant $t_1$, the current generated by the solar panels 16 no longer flows onto the electrical connection 23 (see again figure 4d).

At the time instant $t_3$, the control signal $S_{OC}$ recurs on the connection 23a. The signal detector circuit 30, detecting the presence of the control signal $S_{OC}$, controls the relay 34b in switch-on (time instant $t_3$) and, after a guard time interval $t_3$-$t_4$, for example from 10 ms to 100 ms, in particular equal to 10 ms, controls the transistor 34a in switch-on. This guarantees that the relay 34b is operated in the absence of current.

As shown in figure 4d, the solar panels 16 resume delivery of the electrical current $I_{ON}$ on the electrical connection 23 as from the time instant $t_4$.

Figures 4a-4d are obviously examples; in reality, delays are typically present between detection of the presence/absence of the control signal $S_{OC}$ and consequent driving of the transistor 34a and/or relay 34b. In the same way, representation of the current of figure 4d does not show current transient periods on the electrical connection 23 at the time intervals $t_1$ and $t_4$.

Alternatively to what is shown, it is also possible to command the transistor 34a according to the timing of figure 4c, and the relay 34b according to the timing of figure 4b.

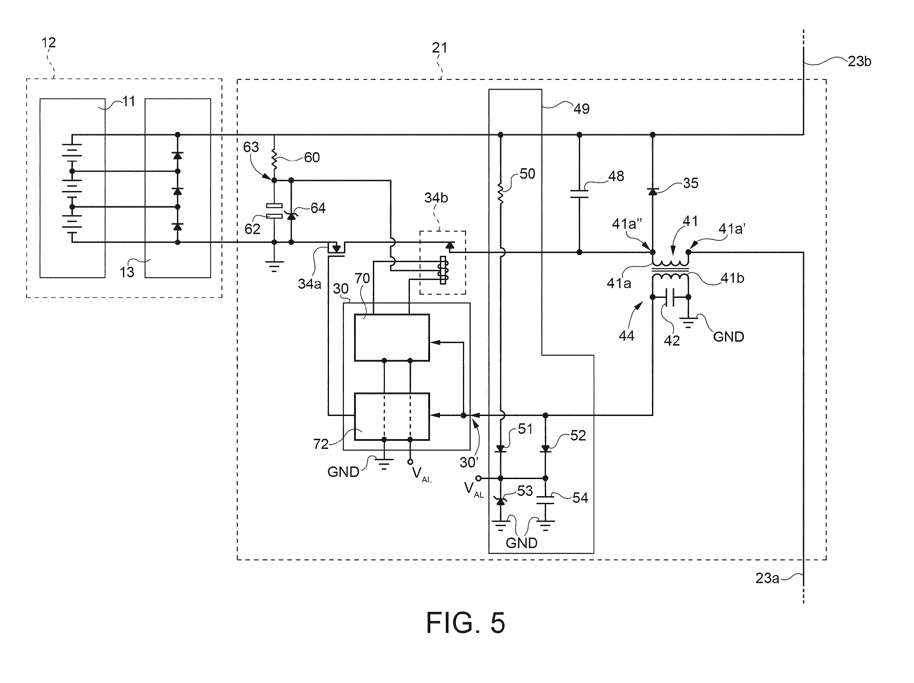

Figure 5 shows the panel electronics 21 in greater detail. As can be seen from figure 5, the transistor 34a and the relay 34b are coupled to the connection 23a by means of a primary winding 41a of a transformer 41, for example a ferrite transformer.

The primary winding 41a of the transformer 41 includes a first conduction terminal 41a' directly coupled to the connection 23a, and a second conduction terminal 41a" directly coupled to a control terminal of the relay 34b. In this way, the primary winding 41a is coupled between the electrical connection 23a and the relay 34b and electrically connects the transistor 34a and the relay 34b to the electrical connection 23a. The primary winding 41a is characterised by a low electrical resistance, for example in the order of approximately 5mΩ. The secondary winding 41b of the transformer 41 is electrically connected between a reference potential terminal GND (ground terminal) and an input terminal 30' of the signal detection circuit 30. The control signal $S_{OC}$, when present on the connection 23a, is carried by the primary winding 41a to the secondary winding 41b of the transformer 41, transforming the current of the control signal $S_{OC}$ in transit on the primary winding of the transformer 41 into appropriate voltage.

A capacitor 42 is connected in parallel to the secondary winding 41b of the transformer 41. This produces a parallel resonant filter 44, which resonates at the frequency of the control signal $S_{OC}$. The parallel resonant filter 44 has the function of selecting and amplifying detection of the control signal $S_{OC}$ (any other noise signals are rejected), generating a filtered signal $S_{OC\_F}$.

The filter 44 is an LC filter, configurable, as known, on the basis of its transfer function. Furthermore, since the resonance frequency $f_0$ of the filter 44 is given by:

$$f_0 = \frac{1}{2\pi\sqrt{LC}}$$

therefore, knowing the secondary inductance L of the transformer 41, the frequency of the control signal $S_{OC}$ (known), the capacity value C of the capacitor is obtained, thus obtaining a filter resonating at the frequency of the control signal $S_{OC}$, as desired.

The panel electronics 21 furthermore comprise the bypass diode 35, connected between the second conduction terminal 41a" of the primary winding 41a and the connection 23b (substantially parallel to the respective solar panel 12 when the transistor 34a and the relay 34b conduct). As said previously, the bypass diode 35, in conditions of energy delivery from the photovoltaic panel, begins conducting when the transistor 34a and the relay 34b are open (interdicted); therefore, opening of the transistor 34a and the relay 34b causes immediate switching of the current that flows on the connection 23a through the bypass diode 35. In parallel to the bypass diode 35, a capacitor 48 is furthermore connected; the latter is characterised by a low impedance at the frequency of the control signal $S_{OC}$, and is used to facilitate the flow of current of the control signal $S_{OC}$ through the primary winding of the transformer 41.

The switch circuit 34 furthermore comprises a power supply block 49, configured to power the switch circuit 34 by means of at least one of two signal sources: (i) a power supply voltage $V_{AL}$ in direct current for example with value equal to approximately 12 V, supplied by the solar panel 12; and (ii) the control signal $S_{OC}$ (power line communication signal, sinusoidal). For this purpose, the power supply block 49 comprises a resistor 50, a diode 51 and a Zener diode 53 connected in series to one another between the connection 23b and the reference terminal GND. More specifically, the resistor 50 is connected between the connection 23b and the anode of the diode 51; the latter has the cathode polarized at the power supply voltage $V_{AL}$. The Zener diode 53 has the cathode polarized at the power supply voltage $V_{AL}$ and the anode connected to the reference terminal GND. The power supply block 49 furthermore comprises a diode 52 and a capacitor 54 connected in series to each other between the input terminal 30' of the signal detection circuit 30 and the reference terminal GND. More specifically, the anode of the diode 52 is connected to the input terminal 30' of the signal detection circuit 30, while the cathode of the diode 52 is connected to the power supply voltage $V_{AL}$; the capacitor 54 is connected between the cathode of the diode 52 and the reference terminal GND. The power supply block 49 therefore guarantees a local power supply of 12 V (dc) for operation of the switch circuit 34.

According to a preferred embodiment, the relay 34b is of bistable type. As known, a bistable relay has two stable positions, which can be reached by application of a signal on one of the two inputs corresponding to the position. In figure 5 the relay 34b is schematized by means of a coil having its conduction terminals connected to the signal detection circuit 30; it is therefore the latter that generates, when necessary as described with reference to figures 4a-4d, the opening/closing signal of the relay 34b. The relay 34b can obviously feature any technology, for example magnetic retention or mechanical retention, and comprise for example two separate windings consisting of a fine conductive wire wound in a spiral on an insulating support with an element inside, typically cylindrical, made of ferrous metal.

A characteristic of the relay 34b is the absence of energy consumption to maintain the open/closed position and the persistence of the open/closed state even when the signal detection circuit 30 is not powered. The open/closed switching, and vice versa, is obtained by driving the corresponding winding with a current peak, in a per se known manner.

The switch circuit 34 furthermore comprises a resistor 60 and a capacitor 62 connected so as to generate at the ends of the Zener diode 64 a DC voltage of approximately 5.1 V, dedicated to supplying the current peak (obtained from the capacitor load) which operates one of the two windings of the bistable relay 34b.

The resistor 60 and the capacitor 62 therefore share a conduction terminal (indicated in figure 5 by the reference number 63). Said shared conduction terminal 63 is electrically coupled to the relay 34b, so as to form a storage element for energy useful for switching of the relay 34b. Summarising, the purpose of the resistor 60 and the capacitor 62 is to create an electricity reserve (stored in the capacitor 62) which can be applied when necessary (i.e. at switching of the relay 34b) to one of the two coils of the relay 34b to activate it in one of the two possible states (conduction or interdiction). On one side, the central contact of the coil of the relay 34b is connected to the capacitor 62, while on the opposite sides a first drive circuit 70 closes the coils towards ground when the relay has to be activated in one or the other operating condition.

Furthermore, a Zener diode 64 is connected between the shared conduction terminal 63 and the reference terminal GND, which serves to limit the load voltage of the capacitor 62 to approximately 5V (dc).

The signal detection circuit 30 preferably comprises the first drive circuit 70 and a second drive circuit 72.

The first drive circuit 70 is configured to receive in input the signal present on the connection 23a (appropriately filtered by means of the filter 44 at the frequency of the carrier of the control signal $S_{OC}$), detect the presence/absence of the control signal $S_{OC}$, and generate at output a signal adapted to control the relay 34b in conduction or interdiction, in particular according to the timings shown in the figures 4a-4c.

The second drive circuit 72 is configured to receive in input the signal present on the connection 23a (appropriately filtered by means of the filter 44 at the frequency of the carrier of the control signal $S_{OC}$), detect the presence/absence of the control signal $S_{OC}$, and generate at output a signal adapted to control the transistor 34a in an ON state (conduction) or OFF state (interdiction) (appropriately polarizing the gate terminal of the latter), in particular according to the timings shown in figures 4a-4c.

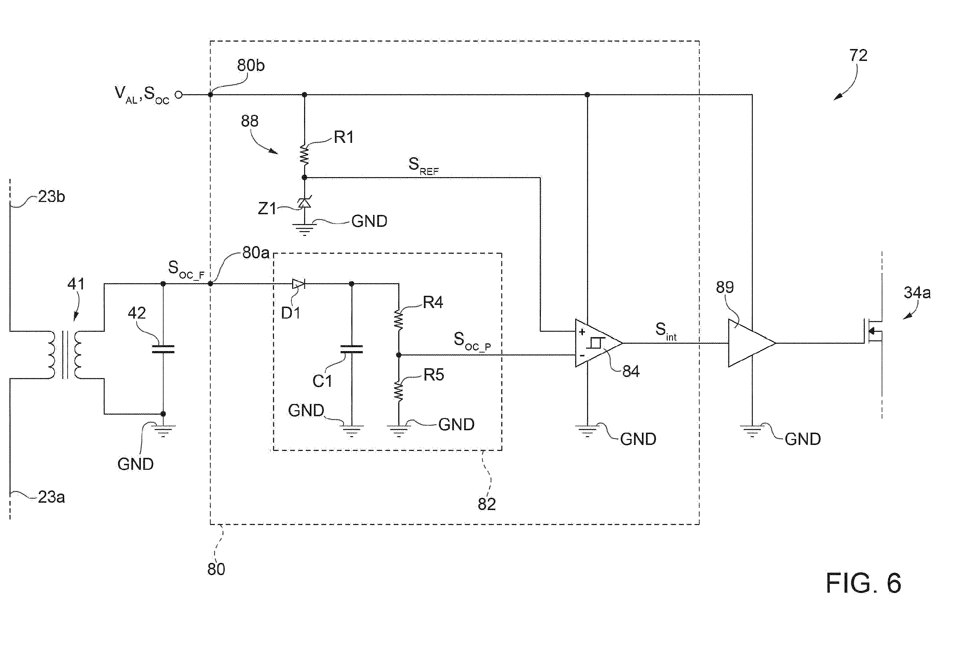

Figure 6 shows a detection circuit 80 (for example belonging to the first drive circuit 70, but implementable analogously in the second drive circuit 72) adapted to acquire signal $S_{OC\_F}$ filtered by means of the filter 44, and to detect the presence or absence of the control signal $S_{OC}$ on the power supply line 23.

With reference to figure 6, the filtered signal $S_{OC\_F}$ is received by the detection circuit 80 at an input terminal 80a. A rectifier circuit or a peak detection circuit 82 of per se known type is present, electrically coupled to the same input terminal 80a. By way of example, figure 6 shows an embodiment of the rectifier circuit 82 (with single half-wave). However, any other type of rectifier of known type can be used. Therefore, the rectifier circuit 82 includes a diode D1, with anode terminal connected to the input terminal 80a, and a capacitor C1. The capacitor C1 is connected between the ground terminal GND and the cathode of the diode D1. As known, the voltage at the output of the rectifier 82 presents ripples which are reduced by use of the capacitor C1. In parallel to the capacitor C1 a resistive load is also connected, formed of the series of resistors R4 and R5. As can be seen in figure 6, the resistors R4 and R5 form a load and a voltage divider, in order to generate a voltage with reduced value at the rectifier output, for subsequent processing. The presence of the voltage divider is necessary as a load at the output of the peak detector formed of D1 and C1, and is also useful for limiting the value of the voltages that circulate inside the detection circuit 80.

When the control signal $S_{OC}$ is present on the line 23, the rectified signal $S_{OC\_P}$ has a voltage value equal to or greater than 2 V (dc), for example in the range between 2 and 5 V (dc). The resistors R4 and R5 are therefore chosen with a value suitable to generate a signal $S_{OC\_P}$ in said range of values. The exact value of the resistors R4 and R5 is obviously chosen depending on the value assumed by the signal $S_{OC\_F}$ (known and pre-determined), in order to obtain the desired value for the signal $S_{OC\_P}$. By way of example, if the signal $S_{OC\_F}$ at the input of the rectifier 82 has a voltage value of 11V, then R1=70kΩ and R2= 40kΩ. In this way $S_{OC\_P}$ assumes the value of approximately 4V. Furthermore the series R1+R2 resistance value is such as to define the right constant of integration RC, useful for correct detection of the signal $S_{OC-P}$.

In the absence of the control signal $S_{OC}$ on the line 23, the value assumed by the signal $S_{OC\_P}$ is the null value which is obviously below the threshold of 2 V (dc) identified above.

The signal $S_{OC\_P}$ is therefore supplied at the input to a comparator 84 (in particular, at the inverting input). The comparator 84 is configured to verify whether the (voltage) value of the signal $S_{OC\_P}$ is equal to or greater than the (voltage) value of a reference signal $S_{REF}$.

In this example, the reference signal $S_{REF}$ is approximately 1.8 - 2.0 V (dc), and in particular equal to the minimum value which the signal $S_{OC\_P}$ should ideally assume in the operating condition, when the control signal $S_{OC}$ is present on the line 23 (e.g. $S_{OC\_P}$ = 4V).

The reference signal $S_{REF}$ is generated in any per se known way. Figure 6 shows a circuit 88 for generating the signal $S_{REF}$ starting from the power supply voltage $V_{AL}$ (e.g. 12 V) supplied by the solar panel 12.

As already said previously, if the power supply voltage $V_{AL}$ supplied by the solar panel 12 ceases, the signal $S_{OC}$ is nevertheless present on the line 23. Therefore, in this condition, it is the signal $S_{OC}$ that is supplied in input to the detection circuit 80 (in particular to the input terminal 80b). It is evident that in order to supply a DC signal at the input 80b, it is expedient to provide a rectifier circuit (not shown) at the input 80b, so as to convert the signal $S_{OC}$ (for example sinusoidal) into a direct current signal.

Therefore, going back to figure 6, the power supply voltage $V_{AL}$ is supplied on an input terminal 80b of the detection circuit 80 and is applied to the ends of a branch including a Zener diode Z1 in series with a resistor R1. More specifically, the anode of the Zener diode Z1 is connected to ground GND, the cathode of the Zener diode Z1 is connected to a terminal of the resistor R1 and the other terminal of the resistor R1 is connected to the input terminal 80b, to receive the power supply voltage $V_{AL}$ (or only the rectified signal $S_{OC}$ if the voltage $V_{AL}$ is not present). The reference signal $S_{REF}$ is taken at the cathode of the Zener diode Z1.

The operation of the reference signal generation circuit 88 is self-evident. The Zener diode Z1 operates as a voltage limiter and the resistor R1 has the function of introducing a polarization current into the Zener Z1. The value of the resistance R1 must be calculated on the basis of specific needs, i.e. as a function of the actual value of the polarization current of the Zener Z1.

To obtain the effective value of R1 it is sufficient to use the formula R1=($V_{AL}$-$V_{Z}$)/$i_{A}$, where $V_{AL}$ is the power supply voltage, $V_{Z}$ is the working voltage of the Zener diode Z1 and $i_{A}$ is the absorption current of the circuit 88 (absorption of the Zener diode Z1). The value of $V_{Z}$ defines, as is evident, the desired voltage value for the reference signal $S_{REF}$ (if the desired reference signal $S_{REF}$ has a value of approximately 2 V, a Zener diode Z1 will be used with working voltage of approximately 2V). For example, the Zener diode Z1 is a LED diode which has excellent Zener diode characteristics for low voltage values.

In order to compensate for any undesired variations in the signal $S_{OC\_P}$ or in the signal $S_{REF}$, according to a preferred embodiment the comparator 84 is a comparator that presents a hysteresis around the reference value supplied by the reference signal $S_{REF}$ (with hysteresis range chosen as required, e.g. a few dozen mV).

The output of the comparator 84 is the signal $S_{int}$ of figure 4a (or a signal correlated with the signal $S_{int}$, for example the signal $S_{int}$ denied /$S_{int}$) and assumes binary values identifying a result of the comparison (e.g. the logic value "1" if $S_{OC\_P} \geq S_{REF}$, and the logic value "0" if $S_{OC\_P} < S_{REF}$; or vice versa according to the design choices).

By way of example, to drive the transistor 34a, the signal $S_{int}$ is supplied in input to a buffer 89 of per se known type (the buffer 89 can be of the inverting type), which generates in output a voltage signal adapted to drive the gate of the transistor 34a using an appropriate voltage value chosen according to the transistor 34a used. The voltage value used to drive the transistor 34a obviously depends on the characteristics of the transistor 34a (maximum and minimum voltage value accepted for polarization of the gate, normally-ON type transistor or normally-OFF type transistor).

In the case of command of the relay 34b, the signal $S_{int}$ (or a signal correlated with the signal $S_{int}$, for example the signal $S_{int}$ denied /$S_{int}$) is used to drive a selector (not shown in the figure) which, in turn, modifies the state of the relay (on or off) as desired. In the case of a bistable relay, as known, the rest positions (for example, contacts open) and work positions (for example, contacts closed) are both stable even in the absence of power supply to the drive coil, and each opening and closing operation of the contacts is obtained by powering the coil for a brief instant (i.e. by means of a current impulse), commanding the selector. Maintaining of the contacts in the work / rest position, also when the power supply ceases, is typically ensured by a mechanical retention system.

Preferably, the transistor 34a and the relay 34b are commanded to realize the timing of figure 4b and 4c. For this purpose, it is advisable to interpose, between the output of the comparator 84 and the input of the selector of the relay 34b, a delayer circuit adapted to delay switch-off of the relay 34b. A circuit of this type can comprise, for example, a detection block for detecting the falling edge of the signal $S_{int}$, configured to supply a signal identifying successful detection of said falling edge (time $t_1$, figure 4a); and a delay block, receiving the signal identifying the successful detection of said falling edge and adapted to delay (at time $t_2$, figure 4c) generation of the switch-off command of the relay 34b.

According to a further embodiment, to produce the element 34b it is also possible to use a timed relay, commercially available, which is able to energize with a delay with respect to the instant in which the relay is powered (energizing delay) and/or is able to de-energize with a delay with respect to the moment of interruption of the power supply (deenergizing delay).

Analogously, it is advisable to interpose, between the output of the comparator 84 and the input of the inverting buffer 89, a detection block for detecting the leading edge of the signal $S_{int}$ (time $t_3$, figure 4a), configured to supply a signal identifying successful detection of said leading edge; and a delaying device adapted to delay (at time $t_4$, figure 4b) switch-on of the transistor 34a when the leading edge is detected.

According to an alternative embodiment, the first and the second drive circuit 70, 72 are microcontrollers, adapted to receive in input the filtered signal $S_{OC\_F}$ associated with the control signal $S_{OC}$ (i.e. the signal filtered by means of the filter 44), detect, in the filtered signal $S_{OC\_F}$, the presence/absence of characteristics (for example frequency and/or amplitude) identifying the control signal $S_{OC}$, and generate in output a signal adapted to controlling in the ON state (conduction) or OFF state (interdiction) the relay 34b and the transistor 34a, on the basis of the timings shown in the figures 4a-4d.

According to an alternative embodiment, the operations described for the microcontrollers which realize the first and the second drive circuit 70, 72 are performed by one single microcontroller, which integrates both the functions of control of operation of the transistor 34a and relay 34b.

In this case, the timing of the switch-on/switch-off signals of the transistor 34a and relay 34b are controlled directly by the microcontroller/s, in a manner self-evident to a person skilled in the art (for example by means of an appropriate software program).

To conclude, the panel electronics 21 are adapted to block, if the control signal $S_{OC}$ is absent, the production of electricity of the panel 12 associated with it. The blocking function is obtained by activating switching of the switch circuit 34, which in practice replaces the panel positioned in series with the string with the bypass diode 35. According to said embodiment the panel electronics 21 are adapted, following a serial logic command from the string electronics 26, to control the switch circuit 34 so as to exclude the panel 12 from the electrical connections 23a, 23b. Following exclusion of the panel 12, the panel electronics 21 are always able to verify, for example by appropriately configuring the panel electronics, the presence or absence of the voltage emitted by the panel. According to the embodiment described and shown, the string electronics 26 send the exclusion command to all the panel electronics 21, simply inhibiting generation of the control signal $S_{OC}$.

It should be noted that interruption (for example accidental or deliberate) of the electrical connections 23a and/or 23b interrupts operation of all the solar panels 12, due to lack of the control signal $S_{OC}$.

In the event of the detection of a fire, where scheduled by the system 10, the Master string electronics 26M and the string electronics 26 suppress emission of the signal $S_{OC}$ towards the respective panel electronics 21, so as to produce switching of the shunt 30 (bypassing all the solar panels 12 by means of the associated diode 35), thus interrupting the delivery of energy by all the solar panels 12 and, therefore, by the associated string 20a-20n. In these conditions the string/s 20a-20n no longer generates/generate DC voltage. At this moment, for example in a situation of fire, it is possible to start fire extinguishing procedures (e.g. with water or similar).

The present invention as described provides one or more of the following advantages:

1) the creation of an integrated system, technologically advanced, easy to install, and able to perform the functions of antitheft and fire-fighting system (understood as blocking of the production of current and voltage of all the system or of single strings of panels);
2) possible application to any photovoltaic plant, independently of the type of photovoltaic panels installed;
3) possible integration of control electronics directly inside the panels.

In short, in the opinion of the Applicant, the invention achieves the following objectives:

- the creation of an electronic antitheft and/or fire-fighting system for photovoltaic plants applicable rapidly, simply and on any photovoltaic system both during construction and on existing systems, also offering the possibility of integrating the panel electronics directly inside the panel;
- the possibility of controlling in remote mode (via any web surfing browser) any blocking of energy production of the plant by means of local or remote connections to the string electronics, in particular to the Master string electronics 26M.

The string electronics 26 can naturally interrupt delivery of the control signal $S_{OC}$ when requested by the master string electronics 26M, which in turn could have received the same request from a remote logic unit, at a higher hierarchical level. If greater safety is required (the logic communication between the master electronics 26M and the electronics may not always be working), it is sufficient to remove the power supply from the units 26, 26M to obtain the same result: electronics which are switched off, although in a state of anomaly, cannot generate any signal, and therefore interrupt generation of the control signal $S_{OC}$.

Lastly, it is clear that modifications and variations can be made to what is described and illustrated here without departing from the protective scope of the present invention, as defined in the attached claims.

## Claims

1. An electronic device (21) for controlling a solar panel (12), connectable by means of electrical connection means (23) of the solar panel (12) to a control device (26, 26M) which is configured to supply, on the electrical connection means (23), a control and supply signal ($S_{OC}$),
said electronic device (21) being configured to:

   - detect the presence and the absence of said control and supply signal ($S_{OC}$) on the electrical connection means (23);
   - electrically couple, in a first operating condition wherein said control and supply signal is present on the electrical connection means, said solar panel (12) to the electrical connection means (23); and
   - electrically decouple, in a second operating condition wherein said control and supply signal is absent on the electrical connection means, said solar panel (12) from the electrical connection means (23).

2. The electronic device (21) as claimed in claim 1, comprising:

   - a first controlled switch (34a) adapted to couple, in the first operating condition, the solar panel (12) to the electrical connection means (23) and decouple, in the second operating condition, the solar panel (12) from the electrical connection means (23);
   - a signal detector (30), configured to detect the presence or the absence of the control and supply signal ($S_{OC}$) on the electrical connection means (23) and control the first controlled switch (34a) in a closed state during the first operating condition and in an open state during the second operating condition, thus coupling and, respectively, decoupling the solar panel (12) to/from the electrical connection means (23);
   wherein said first controlled switch (34a) is configured to be connected between the electrical connection means (23) and the solar panel (12) according to a connection in series with the solar panel (12).

3. The electronic device (21) as claimed in claim 2, further comprising a second controlled switch (34b), connected in series to the first controlled switch (34a), adapted to improve, in the second operating condition, the electrical decoupling between the solar panel (12) and the electrical connection means (23);
the signal detector (30) being further configured to: control the second controlled switch (34b) in the closed state during the first operating condition and in the open state during the second operating condition;
wherein, during the first operating condition, the second controlled switch (34b) is closed before the first controlled switch (34a);
and wherein, during the second operating condition, the first controlled switch (34a) is opened before the second controlled switch (34b).

4. The electronic device (21) as claimed in claim 3, wherein said first controlled switch (34a) is a field effect transistor and said second controlled switch (34b) is a relay, in particular of bistable type.

5. The electronic device (21) as claimed in any one of the preceding claims, wherein the control and supply signal ($S_{OC}$) is a signal modulated in amplitude and/or frequency, and is furthermore configured to electrically supply said electronic device (21).

6. The electronic device (21) as claimed in any one of the preceding claims, furthermore comprising a bypass diode (35) electrically coupled to the electrical connection means (23) and connected in parallel to said solar panel (12), said bypass diode (35) being configured to conduct electric current during said second operating condition, so as to bypass said solar panel (12).

7. An electronic system for controlling one or more solar panels (12) electrically coupled to electrical connection means (23a, 23b; 23) to deliver electrical energy to the electrical connection means, said system comprising:

   - at least one control device (26, 26M) configured to send to the electrical connection means (23) a control and supply signal ($S_{OC}$) modulated in amplitude; and
   - an electronic device (21) as claimed in any one of the claims 1-6.

8. A method for controlling a solar panel (12) connectable, by means of an electrical connection means (23), to a control device (26, 26M) which is configured to send to the electrical connection means (23) a modulated control and supply signal ($S_{OC}$), said method comprising the steps of:

- detecting the presence and absence of said control and supply signal ($S_{OC}$) on the electrical connection means (23);
- electrically coupling said solar panel (12) to the electrical connection means (23) in a first operating condition wherein said control and supply signal is present on the electrical connection means (23); and
- electrically decoupling said solar panel (12) from the electrical connection means (23) in a second operating condition wherein said control and supply signal is absent on the electrical connection means (23).

9. The method as claimed in claim 8, wherein the electronic device (21) comprises a first controlled switch (34a) connected between the solar panel (12) and the electrical connection means (23) according to a connection in series with the solar panel (12), and a signal detector (30), the method further comprising the steps of:

- detecting, by means of the signal detector (30), said presence or absence of the control and supply signal ($S_{OC}$) on the electrical connection means;
- in the first operating condition, controlling in conduction state, by means of the signal detector (30), the first controlled switch to couple the solar panel (12) to the electrical connection means (23); and
- in the second operating condition, controlling in interdiction state by means of the signal detector (30), the first controlled switch to decouple the solar panel (12) from the electrical connection means (23).

10. The method as claimed in claim 9, wherein the electronic device (21) further comprises a second controlled switch (34b), connected in series to the first controlled switch (34a), the method further comprising the steps of:

- in the first operating condition, controlling in conduction state, by means of the signal detector (30), the second controlled switch to couple the solar panel (12) to the electrical connection means (23); and
- in the second operating condition, controlling in interdiction state, by means of the signal detector (30), the second controlled switch to decouple the solar panel (12) from the electrical connection means (23), thus improving the electrical insulation between the solar panel (12) and the electrical connection means (23),

and wherein, during the first operating condition, the step of controlling in conduction state the second controlled switch (34b) is performed before the step of controlling in conduction state the first controlled switch (34a), and during the second operating condition, the step of controlling in interdiction state the first controlled switch (34a) is performed before the step of controlling in interdiction state the second controlled switch (34b).

11. The method as claimed in any of the claims 8-10, further comprising the steps of:

generating a frequency carrying the control and supply signal ($S_{OC}$) ;
electrically supplying said electronic device (21) by means of the control and supply signal ($S_{OC}$).

FIG. 1

FIG. 2a

FIG. 2b

FIG. 3

EP 2 735 342 A1

FIG. 4a

FIG. 4b

FIG. 4c

FIG. 4d

FIG. 5

EP 2 735 342 A1

16

FIG. 6

## EUROPEAN SEARCH REPORT

Application Number

EP 13 19 3960

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 105 856 A1 (ESMOLO LTD [CH])<br>30 September 2009 (2009-09-30)<br>* abstract *<br>* figure 1 *<br>* paragraph [0031] *<br>* sentences 15-21, paragraph 34 *<br>* sentences 1-3, paragraph 35 *<br>----- | 1,2,5-9,<br>11<br>3,4,10 | INV.<br>A62C99/00<br>H04B3/54 |
| X<br>A | DE 198 44 977 A1 (SIEMENS SOLAR GMBH [DE])<br>13 April 2000 (2000-04-13)<br>* figures 1-3 *<br>* column 5, lines 25,30-43 *<br>* column 7, lines 1-7 *<br>* column 3, lines 58-63 *<br>----- | 1,2,5-9,<br>11<br>3,4,10 | |

TECHNICAL FIELDS
SEARCHED (IPC)

A62C
H04B
G08B

The present search report has been drawn up for all claims

| Place of search | Date of completion of the search | Examiner |
|---|---|---|
| Munich | 14 March 2014 | Plathner, B |

EPO FORM 1503 03.82 (P04C01)

**ANNEX TO THE EUROPEAN SEARCH REPORT
ON EUROPEAN PATENT APPLICATION NO.**

EP 13 19 3960

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2014

| Patent document cited in search report | | Publication date | Patent family member(s) | | Publication date |
|---|---|---|---|---|---|
| EP 2105856 | A1 | 30-09-2009 | AU | 2008353322 A1 | 01-10-2009 |
| | | | CA | 2718186 A1 | 01-10-2009 |
| | | | CN | 102037469 A | 27-04-2011 |
| | | | EP | 2105856 A1 | 30-09-2009 |
| | | | EP | 2260428 A1 | 15-12-2010 |
| | | | JP | 2011515769 A | 19-05-2011 |
| | | | RU | 2010138051 A | 20-03-2012 |
| | | | US | 2011050002 A1 | 03-03-2011 |
| | | | WO | 2009118068 A1 | 01-10-2009 |
| DE 19844977 | A1 | 13-04-2000 | AT | 277447 T | 15-10-2004 |
| | | | DE | 19844977 A1 | 13-04-2000 |
| | | | EP | 1125352 A1 | 22-08-2001 |
| | | | ES | 2224748 T3 | 01-03-2005 |
| | | | ID | 29391 A | 30-08-2001 |
| | | | JP | 4130732 B2 | 06-08-2008 |
| | | | JP | 2002527018 A | 20-08-2002 |
| | | | PT | 1125352 E | 28-02-2005 |
| | | | US | 6650031 B1 | 18-11-2003 |
| | | | WO | 0019580 A1 | 06-04-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2317486 A

- DE 19844977